# EUROPÄISCHE PATENTSCHRIFT

(11) **EP 4 172 518 B1**
(45) Veröffentlichungstag und Bekanntmachung des Hinweises auf die Patenterteilung: **26.03.2025**
(21) Anmeldenummer: 21731979.7
(22) Anmeldetag: 08.06.2021
(51) Int. Cl.: F16K 11/087, F01P 7/14

(54) **MISCHVENTIL**
MIXING VALVE
SOUPAPE DE MÉLANGE

(30) Priorität: 25.06.2020 DE 102020207925
(43) Veröffentlichungstag der Anmeldung: 03.05.2023
(73) Patentinhaber: Vitesco Technologies GmbH, 93055 Regensburg (DE)
(72) Erfinder: ESER, Gerhard, 81737 München (DE); BRETTNER, Sebastian, 81737 München (DE); DILLINGER, Manuel, 81737 München (DE); FEULNER, Markus, 81737 München (DE); KOUPAL, Mitchell, 81737 München (DE)
(74) Vertreter: Vitesco Technologies
(86) Internationale Anmeldenummer: PCT/EP2021/065245
(87) Internationale Veröffentlichungsnummer: WO 2021/259626

(56) Entgegenhaltungen:
- CN-A- 109 424 766
- DE-A1- 102018 214 174
- JP-A- 2018 100 682
- JP-A- S6 138 274

## Beschreibung

Die vorliegende Erfindung betrifft ein Mischventil, insbesondere für einen Wärmetransportmittelkreislauf und/oder ein Kraftfahrzeug, einen Wärmetransportmittelkreislauf und ein Kraftfahrzeug mit dem Mischventil sowie ein Verfahren zum selektiven Verbinden von Ein- und Auslässen des Mischventils.

JPS61-38274A betrifft ein drehbares Vier-Wege-Ventil zum Umschalten eines Strömungsweges durch Drehen eines Ventilkörpers, insbesondere ein drehbares Vier-Wege-Ventil, das in der Lage ist, sowohl die Durchflussmenge als auch die Richtung des Fluidstroms zu begrenzen.

CN109424766A betrifft ein drehbares Richtungssteuerventil, das ein Steuerkolbenelement, wobei das Steuerkolbenelement einen Steuerkolben mit einem ersten Durchflusskanal und einem zweiten Durchflusskanal aufweist, umfasst, wobei sich der erste Durchflusskanal am Ventil befindet.

JP2018100682A betrifft ein fließwegumschaltbares Ventil umfassend eine Ventilkammer, eine Bodenöffnung am Boden der Ventilkammer und mindestens drei Öffnungen, insbesondere einen Ventilkörper mit einer Vielzahl von Seitenöffnungen und einem rohrförmigen Ventilkörper, der drehbar in der Ventilkammer angeordnet ist.

DE102018214174A1 betrifft Eine Ventilanordnung mit mehreren Anschlüssen, die ein Gehäuse, einen Rotor, der derart in dem Gehäuse angeordnet ist, dass der Rotor dahingehend betreibbar ist, in eine Vielzahl von Positionen gebracht zu werden, und einen ersten Kanal, der integral als Teil des Rotors ausgebildet ist, umfasst.

Aufgabe der vorliegenden Erfindung ist es, ein Ventil zu verbessern.

Diese Aufgabe wird durch ein Mischventil mit den Merkmalen des Anspruchs 1 gelöst. Ansprüche 9-11 stellen einen Wärmetransportmittelkreislauf und ein

Kraftfahrzeug mit einem hier beschriebenen Mischventil bzw. Wärmetransportmittelkreislauf sowie ein Verfahren zum Betreiben eines solchen Mischventils unter Schutz. Die Unteransprüche betreffen vorteilhafte Weiterbildungen.

Nach einer Ausführung der vorliegenden Erfindung weist ein Mischventil ein Gehäuse mit einem ersten Einlass, einem zweiten Einlass, einem ersten Auslass und einem zweiten Auslass sowie ein Ventilglied, insbesondere einen Ventilkörper, auf, welches verstellbar, in einer Ausführung um eine (virtuelle) Drehachse verdrehbar, in einer Weiterbildung um wenigstens 30°, in einer Ausführung um wenigstens 45°, in einer Weiterbildung endlos bzw. um mehr als 360° verdrehbar, wenigstens teilweise in dem Gehäuse angeordnet ist und aufweist:
a) eine erste ein- oder mehrkanalige Fluidpassage, die
   i) in einer ersten Stellung des Ventilglieds den ersten Einlass mit dem ersten Auslass verbindet,
   ii) in einer zweiten Stellung des Ventilglieds den ersten Einlass mit dem zweiten Auslass verbindet, und
   iii) in einer dritten Stellung des Ventilglieds den ersten Einlass mit dem ersten Auslass und mit dem zweiten Auslass verbindet; und
b) eine zweite ein- oder mehrkanalige Fluidpassage, die
   i) in der ersten Stellung des Ventilglieds den zweiten Einlass mit dem zweiten Auslass verbindet,
   ii) in der zweiten Stellung des Ventilglieds den zweiten Einlass mit dem ersten Auslass verbindet; und
   iii) in der dritten Stellung des Ventilglieds, welche in einer Ausführung zwischen der ersten und zweiten Stellung liegt, den zweiten Einlass mit dem ersten Auslass und mit dem zweiten Auslass verbindet.

**In** einer Ausführung sind
a) in der ersten Stellung des Ventilglieds
   nur der erste Einlass mit dem ersten Auslass und der zweite Einlass mit dem zweiten Auslass verbunden bzw.
   der erste Einlass nicht mit dem zweiten Auslass, der zweite Einlass nicht mit dem ersten Auslass und der erste Einlass nicht mit dem zweiten Einlass verbunden bzw.
   der erste Einlass von dem zweiten Ein- und Auslass getrennt sowie der zweite Einlass von dem ersten Auslass getrennt; und/oder
b) in der zweiten Stellung des Ventilglieds nur der erste Einlass mit dem zweiten Auslass und der zweite Einlass mit dem ersten Auslass bzw.
   der erste Einlass nicht mit dem ersten Auslass, der zweite Einlass nicht mit dem zweiten Auslass und der erste Einlass nicht mit dem zweiten Einlass verbunden bzw.
   der erste Einlass von dem ersten Auslass und dem zweiten Einlass getrennt sowie der zweite Einlass von dem zweiten Auslass getrennt.

Hierdurch wird in einer Ausführung neben einem Trennen und einer Serien- bzw. Überkreuzschaltung von Fluidströmen vorteilhaft zusätzlich ein Mischen der Fluidströme ermöglicht. Das Mischventil ist in einer Ausführung ein Fluidventil, in einer Weiterbildung ein Ventil zum wahlweisen bzw. selektiven Trennen, Serien- bzw. Überkreuzschalten und Mischen von Flüssigkeiten.

In einer Ausführung ist ein minimaler durchströmbarer Querschnitt zwischen dem ersten Einlass und dem ersten Auslass in der dritten Stellung des Ventilglieds kleiner als in der ersten Stellung des Ventilglieds und in einer Weiterbildung größer als Null. Wie vorstehend erläutert ist in einer Ausführung ein minimaler durchströmbarer Querschnitt zwischen dem ersten Einlass und dem ersten Auslass in der zweiten Stellung des Ventilglieds gleich Null.

Zusätzlich oder alternativ ist in einer Ausführung ein minimaler durchströmbarer Querschnitt zwischen dem ersten Einlass und dem zweiten Auslass in der dritten Stellung des Ventilglieds kleiner als in der zweiten Stellung des Ventilglieds und in einer Weiterbildung größer als Null. Wie vorstehend erläutert ist in einer Ausführung ein minimaler durchströmbarer Querschnitt zwischen dem ersten Einlass und dem zweiten Auslass in der ersten Stellung des Ventilglieds gleich Null.

Zusätzlich oder alternativ ist in einer Ausführung ein minimaler durchströmbarer Querschnitt zwischen dem zweiten Einlass und dem zweiten Auslass in der dritten Stellung des Ventilglieds kleiner als in der ersten Stellung des Ventilglieds und in einer Weiterbildung größer als Null. Wie vorstehend erläutert ist in einer Ausführung ein minimaler durchströmbarer Querschnitt zwischen dem zweiten Einlass und dem zweiten Auslass in der zweiten Stellung des Ventilglieds gleich Null.

Zusätzlich oder alternativ ist in einer Ausführung ein minimaler durchströmbarer Querschnitt zwischen dem zweiten Einlass und dem ersten Auslass in der dritten Stellung des Ventilglieds kleiner als in der zweiten Stellung des Ventilglieds und in einer Weiterbildung größer als Null. Wie vorstehend erläutert ist in einer Ausführung ein minimaler durchströmbarer Querschnitt zwischen dem zweiten Einlass und dem ersten Auslass in der ersten Stellung des Ventilglieds gleich Null.

Hierdurch wird in einer Ausführung ein vorteilhaftes Mischen von Fluidströmen ermöglicht.

In einer Ausführung verbindet in einer vierten Stellung des Ventilglieds die erste Fluidpassage den ersten Einlass mit dem ersten Auslass und mit dem zweiten Auslass und die zweite Fluidpassage den zweiten Einlass mit dem ersten Auslass und mit dem zweiten Auslass.

In einer Ausführung ist ein minimaler durchströmbarer Querschnitt zwischen dem ersten Einlass und dem ersten Auslass in der vierten Stellung des Ventilglieds kleiner als in der ersten und dritten Stellung des Ventilglieds und in einer Weiterbildung größer als Null.

Zusätzlich oder alternativ ist in einer Ausführung ein minimaler durchströmbarer Querschnitt zwischen dem ersten Einlass und dem zweiten Auslass in der vierten Stellung des Ventilglieds kleiner als in der zweiten Stellung des Ventilglieds und größer als in der dritten Stellung des Ventilglieds, in einer Weiterbildung größer als Null.

Zusätzlich oder alternativ ist in einer Ausführung ein minimaler durchströmbarer Querschnitt zwischen dem zweiten Einlass und dem zweiten Auslass in der vierten Stellung des Ventilglieds kleiner als in der ersten und dritten Stellung des Ventilglieds und in einer Weiterbildung größer als Null.

Zusätzlich oder alternativ ist in einer Ausführung ein minimaler durchströmbarer Querschnitt zwischen dem zweiten Einlass und dem ersten Auslass in der vierten Stellung des Ventilglieds kleiner als in der zweiten Stellung des Ventilglieds und größer als in der dritten Stellung des Ventilglieds, in einer Weiterbildung größer als Null.

Hierdurch wird in einer Ausführung vorteilhaft ein unterschiedliches bzw. variables Mischen von Fluidströmen ermöglicht.

In einer Ausführung verbindet in einer weiteren Stellung des Ventilglieds die erste Fluidpassage den ersten Einlass nur mit dem ersten Auslass und die zweite Fluidpassage verbindet den zweiten Einlass mit dem ersten Auslass und mit dem zweiten Auslass.

Zusätzlich oder alternativ verbindet in einer Ausführung in einer weiteren Stellung des Ventilglieds die erste Fluidpassage den ersten Einlass nur mit dem zweiten Auslass und die zweite Fluidpassage verbindet den zweiten Einlass mit dem ersten Auslass und mit dem zweiten Auslass.

Zusätzlich oder alternativ verbindet in einer Ausführung in einer weiteren Stellung des Ventilglieds die erste Fluidpassage den ersten Einlass mit dem ersten Auslass und mit dem zweiten Auslass und die zweite Fluidpassage verbindet den zweiten Einlass nur mit dem ersten Auslass.

Zusätzlich oder alternativ verbindet in einer Ausführung in einer weiteren Stellung des Ventilglieds die erste Fluidpassage den ersten Einlass mit dem ersten Auslass und mit dem zweiten Auslass und die zweite Fluidpassage verbindet den zweiten Einlass nur mit dem zweiten Auslass.

Hierdurch wird in einer Ausführung vorteilhaft ein unterschiedliches bzw. variables Mischen von Fluidströmen ermöglicht.

In einer Ausführung ist bzw. wird das Ventilglied zwischen wenigstens zwei der hier genannten Stellungen, in einer Weiterbildung reversibel von der ersten in die dritte oder vierte oder (eine der) weitere(n), von der zweiten in die vierte oder dritte oder (eine der) weitere(n) und/oder von der dritten in die vierte oder (eine der) weitere(n) Stellung, kontinuierlich bzw. stufenlos verstellbar bzw. verstellt, insbesondere verdrehbar bzw. verdreht.

In einer Ausführung weist das Ventilglied neben den hier genannten Stellungen noch mehrere, in einer Ausführung unendlich viele, Zwischenstellungen auf, die insbesondere kontinuierlich ineinander übergehen können. **In** einer Ausführung ist bzw. wird das Ventilglied kontinuierlich bzw. stufenlos verstellbar bzw. verstellt, insbesondere verdrehbar bzw. verdreht, und durchfährt dabei in einer Ausführung sukzessive eine oder mehrere der hier genannten Stellungen.

Hierdurch wird in einer Ausführung ein vorteilhaftes, insbesondere verlust- und/oder stoßarmes, Mischen von Fluidströmen ermöglicht.

Erfindungsgemäß weist die erste Fluidpassage eine Verzweigung mit einem ersten Ast, der in der ersten, zweiten und dritten Stellung des Ventilglieds, in einer Weiterbildung in der ersten, zweiten, dritten und vierten Stellung des Ventilglieds, mit dem ersten Einlass verbunden ist, einem zweiten Ast, der in der ersten und dritten Stellung des Ventilglieds, in einer Weiterbildung in der ersten, dritten und vierten Stellung des Ventilglieds, mit dem ersten Auslass verbunden ist, und einem dritten Ast auf, der in der zweiten und dritten Stellung des Ventilglieds, in einer Weiterbildung in der zweiten, dritten und vierten Stellung des Ventilglieds, mit dem zweiten Auslass verbunden ist.

Zusätzlich weist in einer Ausführung eine Außenfläche des Ventilglieds eine, in einer Weiterbildung nutartige, erste Aussparung auf.

In einer Weiterbildung verbindet die erste Aussparung in der dritten Stellung, in einer Ausführung in der dritten und vierten Stellung, des Ventilglieds die beiden Einlässe miteinander, die beiden Auslässe miteinander oder wenigstens einen der Einlässe und wenigstens einen der Auslässe miteinander.

In einer Ausführung überschneidet bzw. -lappt sich die erste Aussparung in der dritten Stellung, in einer Ausführung in der dritten und vierten Stellung, mit den beiden Einlässen, den beiden Auslässen bzw. diesem wenigstens einen Ein- und wenigstens einen Auslass jeweils wenigstens teilweise.

Zusätzlich oder alternativ ist in einer Ausführung die erste Aussparung durch eine Durchgangspassage mit einer, in einer Weiterbildung nutartigen, zweiten Aussparung verbunden, welche ihrerseits in wenigstens einer, in einer Ausführung weiteren, Stellung, des Ventilglieds die beiden Einlässe miteinander verbindet, die beiden Auslässe miteinander verbindet oder wenigstens einen der Einlässe und wenigstens einen der Auslässe miteinander verbindet.

In einer Ausführung überschneidet bzw. -lappt sich die zweite Aussparung in dieser wenigstens einen (weiteren) Stellung mit den beiden Einlässen, den beiden Auslässen bzw. diesem wenigstens einen Ein- und wenigstens einen Auslass jeweils wenigstens teilweise.

Zusätzlich oder alternativ ist in einer Ausführung wenigstens ein Abschnitt einer Außenfläche des Ventilglieds, in einer Weiterbildung ein Abschnitt mit einer Öffnung, insbesondere Eintrittsöffnung, des ersten Astes und/oder ein Abschnitt mit einer Öffnung, insbesondere Austrittsöffnung, des zweiten Astes und/oder ein Abschnitt mit einer Öffnung, insbesondere Austrittsöffnung, des dritten Astes und/oder ein Abschnitt mit der ersten Aussparung und/oder ein Abschnitt mit der zweiten Aussparung, rotationssymmetrisch, in einer Ausführung kugelsegmentförmig.

Hierdurch kann jeweils, insbesondere durch Kombination von zwei oder mehr der vorgenannten Merkmale, ein vorteilhaftes, in einer Ausführung kompaktes, zuverlässiges, gut verstellbares und/oder strömungswiderstandsarmes, Mischventil realisiert werden.

In einer Ausführung sind die beiden Einlässe in einer Rotationsrichtung um eine Drehachse des Ventilglieds gegeneinander versetzt, in einer Weiterbildung um wenigstens 45°, in einer Ausführung um wenigstens 90°. In einer Ausführung sind diese Einlässe in einer Ebene angeordnet.

Zusätzlich oder alternativ sind in einer Ausführung die beiden Auslässe in einer Rotationsrichtung um eine Drehachse des Ventilglieds gegeneinander versetzt, in einer Weiterbildung um wenigstens 45°, in einer Ausführung um wenigstens 90°. In einer Ausführung sind diese Auslässe in einer Ebene angeordnet.

Zusätzlich oder alternativ sind in einer Ausführung wenigstens einer der Einlässe und wenigstens einer der Auslässe in einer Rotationsrichtung um eine Drehachse des Ventilglieds gegeneinander versetzt, in einer Weiterbildung um wenigstens 45°, in einer Ausführung um wenigstens 90°. In einer Ausführung sind dieser wenigstens eine Ein- und wenigstens eine Auslass in einer Ebene angeordnet.

Zusätzlich oder alternativ sind in einer Ausführung die beiden Einlässe in einer Umlaufrichtung um eine zur Drehachse des Ventilglieds senkrechte Versatzachse gegeneinander versetzt, in einer Weiterbildung um wenigstens 45°, insbesondere um wenigstens 60°, in einer Ausführung um wenigstens 85°.

Zusätzlich oder alternativ sind in einer Ausführung die beiden Auslässe in einer Umlaufrichtung um eine zur Drehachse des Ventilglieds senkrechte Versatzachse gegeneinander versetzt, in einer Weiterbildung um wenigstens 45°, insbesondere um wenigstens 60°, in einer Ausführung um wenigstens 85°.

Zusätzlich oder alternativ sind in einer Ausführung wenigstens einer der Einlässe und wenigstens einer der Auslässe in einer Umlaufrichtung um eine zur Drehachse des Ventilglieds senkrechte Versatzachse gegeneinander versetzt, in einer Weiterbildung um wenigstens 45°, insbesondere um wenigstens 60°, in einer Ausführung um wenigstens 85°.

Zusätzlich oder alternativ durchstößt in einer Ausführung die (virtuelle bzw. kinematische) Drehachse des Ventilglieds wenigstens einen der Einlässe und/oder wenigstens einen der Auslässe.

Hierdurch kann jeweils, insbesondere durch Kombination von zwei oder mehr der vorgenannten Merkmale, ein vorteilhaftes, in einer Ausführung kompaktes, zuverlässiges, gut verstellbares und/oder strömungswiderstandsarmes, Mischventil realisiert werden.

Das Mischventil kann, insbesondere aufgrund der baulichen, thermischen, fluidmechanischen und/oder steuerungstechnischen Randbedingungen, mit besonderem Vorteil für ein(en) bzw. in einem Wärmetransportmittelkreislauf und/oder Kraftfahrzeug, insbesondere Personenkraftwagen, insbesondere also für einen bzw. in einem Kraftfahrzeug-Wärmetransportmittelkreislauf, verwendet werden, ohne jedoch hierauf beschränkt zu sein.

Nach einer Ausführung der vorliegenden Erfindung weist daher ein Kraftfahrzeug, insbesondere Personenkraftwagen, bzw. ein Wärmetransportmittelkreislauf wenigstens ein hier beschriebenes Mischventil, einen ersten Teilkreislauf, der an den ersten Einlass und den ersten Auslass des Mischventils angeschlossen ist, und einen zweiten Teilkreislauf auf, der an den zweiten Einlass und den zweiten Auslass des Mischventils angeschlossen ist. **In** einer Ausführung weist das Kraftfahrzeug den Wärmetransportmittelkreislauf mit dem Mischventil auf.

Somit kann in einer Ausführung in dem bzw. durch das Mischventil der erste und zweite Teilkreislauf voneinander getrennt, in Serie geschaltet bzw. ein Teil von den ersten Teilkreislauf durchströmendes Wärmetransportmittel aus diesem in den zweiten Teilkreislauf abgezweigt und ein Teil von den zweiten Teilkreislauf durchströmendes Wärmetransportmittel aus diesem in den ersten Teilkreislauf zurückgeführt werden.

"Verbinden" bzw. "verbunden" ist in einer Ausführung "strömungstechnisch Verbinden" bzw. "strömungs(technisch )verbunden".

Weitere Vorteile und Merkmale ergeben sich aus den Unteransprüchen und den Ausführungsbeispielen. Hierzu zeigt, teilweise schematisiert:
- Fig. 1:: ein Mischventil nach einer Ausführung der vorliegenden Erfindung in perspektivischer Ansicht;
- Fig. 2:: ein Ventilglied des Mischventils in perspektivischer Ansicht;

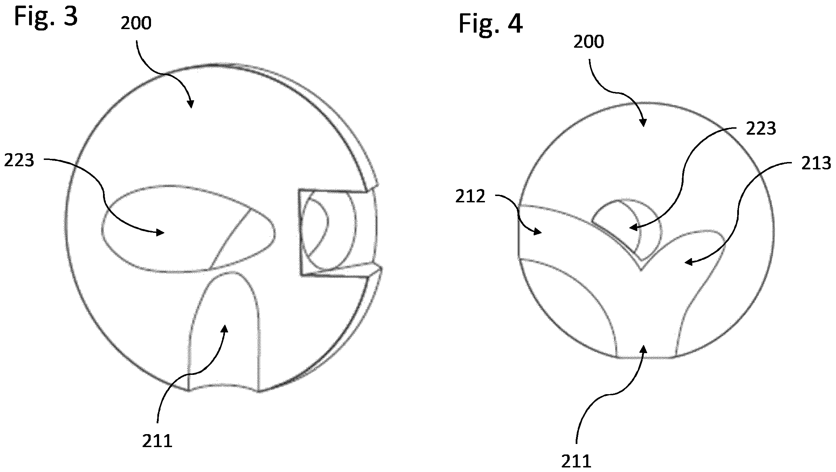

- Fig. 3:: einen perspektivischen Teilschnitt des Ventilglieds in einer zur Ebene der Fign. 5 senkrechten Schnittebene;
- Fig. 4:: einen perspektivischen Teilschnitt des Ventilglieds in einer zur Ebene der Fign. 3, 5 senkrechten Schnittebene;
- Fig. 5A:: einen Schnitt des Mischventils längs der Linie V-V in Fig. 2 mit dem Ventilglied in einer ersten Stellung;
- Fig. 5B:: einen Fig. 5A entsprechenden Schnitt mit dem Ventilglied in einer zweiten Stellung;
- Fig. 5C:: einen Fign. 5A, 5B entsprechenden Schnitt mit dem Ventilglied in einer dritten Stellung;
- Fig. 5D:: einen Fign. 5A-5C entsprechenden Schnitt mit dem Ventilglied in einer vierten Stellung;
- Fig. 5E:: einen Fign. 5A-5D entsprechenden Schnitt mit dem Ventilglied in einer weiteren Stellung; und
- Fig. 6:: ein Funktionsprinzip des Mischventils.

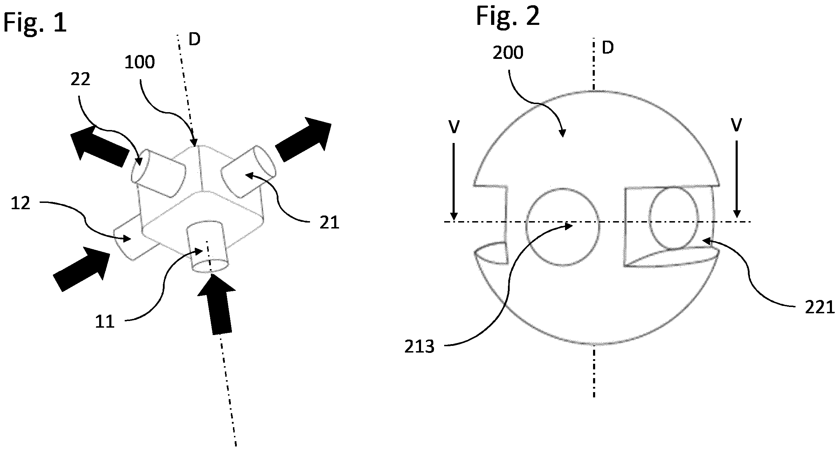

Fig. 1 zeigt ein Mischventil nach einer Ausführung der vorliegenden Erfindung in perspektivischer Ansicht.

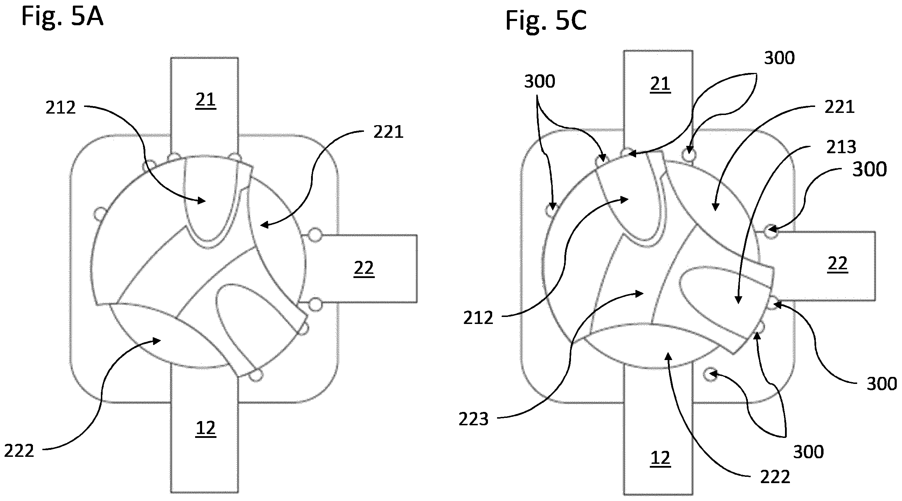

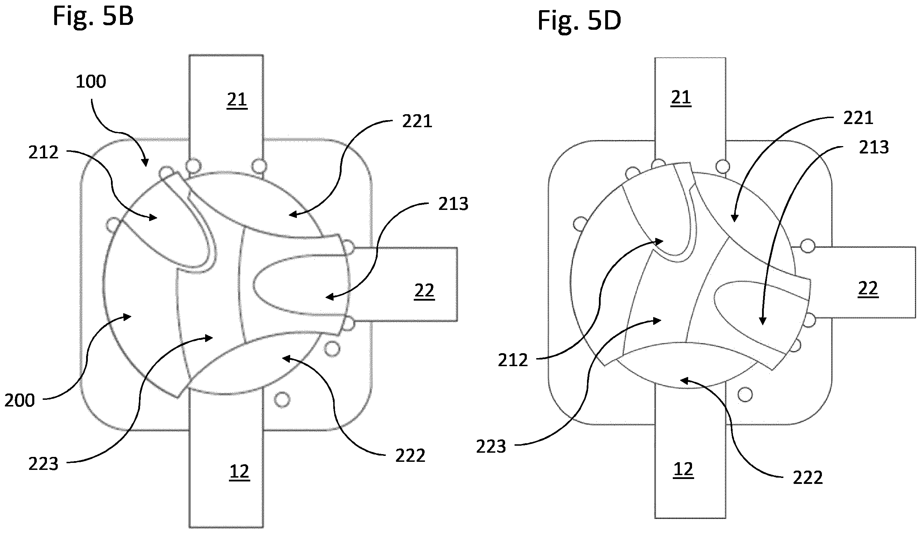

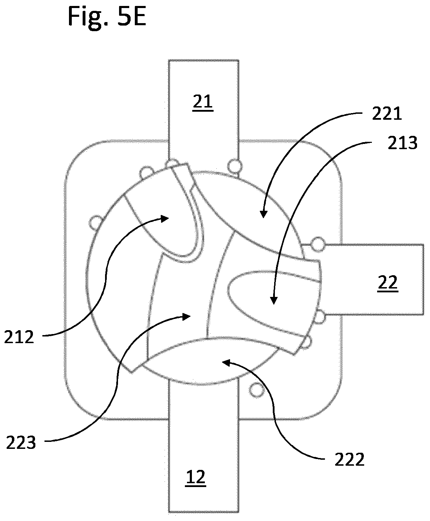

Das Mischventil weist ein Gehäuse 100 mit einem ersten Einlass 11, einem zweiten Einlass 12, einem ersten Auslass 21 und einem zweiten Auslass 22 und ein kugelförmiges Ventilglied 200 auf, das verdrehbar in dem Gehäuse angeordnet ist (vgl. Fign. 5) und eine erste Fluidpassage 211-213 und eine zweite Fluidpassage 221-223 aufweist.

Mit 300 sind Dichtungen zwischen Gehäuse 100 und Ventilglied 200 bezeichnet. Eine oder mehrere dieser Dichtungen 300 können in einer nicht dargestellten Abwandlung auch entfallen.

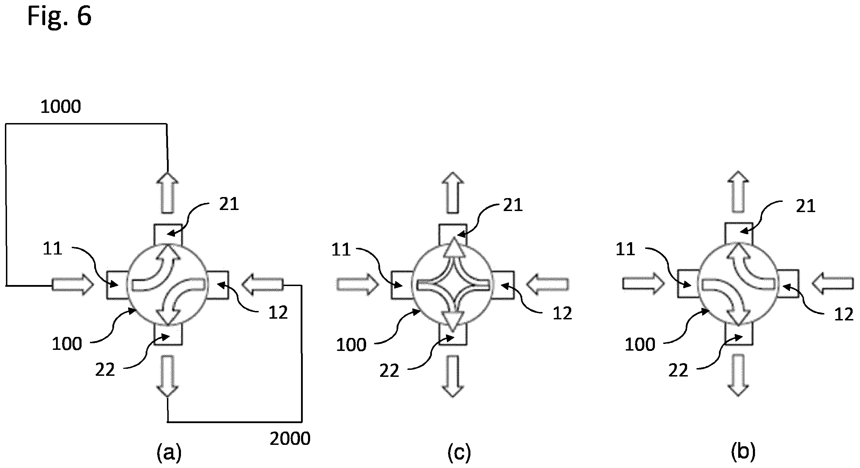

Die erste Fluidpassage 211-213 verbindet in einer ersten Stellung des Ventilglieds (vgl. Fig. 5A, 6(a)) den ersten Einlass 11 mit dem ersten Auslass 21, in einer zweiten Stellung des Ventilglieds (vgl. Fig. 5B, 6(b)) den ersten Einlass 11 mit dem zweiten Auslass 22, und in einer dritten Stellung des Ventilglieds (vgl. Fig. 5C, 6(c)) und einer vierten Stellung des Ventilglieds (vgl. Fig. 5D) jeweils den ersten Einlass 11 mit dem ersten Auslass 21 und mit dem zweiten Auslass 22.

Die zweite Fluidpassage 221-223 verbindet in der ersten Stellung des Ventilglieds den zweiten Einlass 12 mit dem zweiten Auslass 22, in der zweiten Stellung des Ventilglieds den zweiten Einlass 12 mit dem ersten Auslass 21 und in der dritten und vierten Stellung des Ventilglieds (vgl. Fig. 5D) jeweils den zweiten Einlass 12 mit dem ersten Auslass 21 und mit dem zweiten Auslass 22.

Die erste Fluidpassage weist eine Verzweigung mit einem ersten Ast 211, der in der ersten, zweiten, dritten und vierten Stellung des Ventilglieds mit dem ersten Einlass 11 verbunden ist, einem zweiten Ast 212, der in der ersten, dritten und vierten Stellung des Ventilglieds mit dem ersten Auslass 21 verbunden ist und in der zweiten Stellung des Ventilglieds nicht mit dem ersten Auslass 21 verbunden ist, und einem dritten Ast 213 auf, der in der zweiten, dritten und vierten Stellung des Ventilglieds mit dem zweiten Auslass 22 verbunden ist und in der ersten Stellung des Ventilglieds nicht mit dem zweiten Auslass 22 verbunden ist.

Die Außenfläche des Ventilglieds weist eine nutartige erste Aussparung 221 auf, die in der dritten und vierten Stellung des Ventilglieds die beiden Auslässe 21, 22 miteinander verbindet, wobei sich die erste Aussparung 221 mit den beiden Auslässen 21, 22 jeweils überschneidet bzw. überlappt.

Die Außenfläche des Ventilglieds weist eine nutartige zweite Aussparung 222 auf. Wird das Ventilglied aus seiner in Fig. 5B gezeigten zweiten Stellung gegen den Uhrzeigersinn weiter verdreht, so verbindet diese zweite Aussparung 222 in einigen dieser sich dabei ergebenden weiteren Stellungen (nicht dargestellt) dann den zweiten Einlass 12 und den zweiten Auslass 22 bzw. die beiden Auslässe 21, 22 ebenfalls mit variierendem minimalem durchströmbarem Querschnitt zwischen diesen, wobei sich die zweite Aussparung 222 dann mit dem zweiten Ein- und Auslass 12, 22 jeweils überschneidet bzw. überlappt.

Eine gekrümmte Durchgangspassage 223 verbindet die erste und zweite Aussparung 221, 222 miteinander.

Der zweite Einlass 12 und der zweite Auslass 22 sowie der zweite und erste Auslass 22, 21 sind in einer Rotationsrichtung um eine Drehachse D des Ventilglieds, die auf der Zeichenebene der Fign. 5 senkrecht steht, jeweils gegeneinander um wenigstens 90° versetzt und in einer gemeinsamen Ebene angeordnet.

Der erste Einlass 11 und der zweite Einlass 12, der erste Einlass 11 und der erste Auslass 21 sowie der erste Einlass 11 und der zweite Auslass 22 sind jeweils in einer Umlaufrichtung um eine zur Drehachse D des Ventilglieds senkrechte Versatzachse gegeneinander um 90° versetzt, wobei die Drehachse D des Ventilglieds den ersten Einlass 11 durchstößt, welcher in den Fign. 5 durch das Ventilglied 200 verdeckt ist bzw. unter bzw. hinter der Zeichenebene der Fign. 5 liegt.

In der dritten Stellung des Ventilglieds (vgl. Fig. 5C) ist ein minimaler durchströmbarer Querschnitt zwischen dem ersten Einlass 11 und dem ersten Auslass 21 kleiner als in der ersten Stellung des Ventilglieds (vgl. Fig. 5A) und ein minimaler durchströmbarer Querschnitt zwischen dem ersten Einlass 11 und dem zweiten Auslass 22 kleiner als in der zweiten Stellung des Ventilglieds (vgl. Fig. 5B).

Ein minimaler durchströmbarer Querschnitt zwischen dem zweiten Einlass 12 und dem zweiten Auslass 22 ist in der dritten Stellung des Ventilglieds (vgl. Fig. 5C) kleiner als in der ersten Stellung des Ventilglieds (vgl. Fig. 5A) und ein minimaler durchströmbarer Querschnitt zwischen dem zweiten Einlass 12 und dem ersten Auslass 11 in der dritten Stellung des Ventilglieds kleiner als in der zweiten Stellung des Ventilglieds (vgl. Fig. 5B).

In der vierten Stellung des Ventilglieds (vgl. Fig. 5D) ist ein minimaler durchströmbarer Querschnitt zwischen dem ersten Einlass 11 und dem ersten Auslass 21 kleiner als in der ersten und dritten Stellung des Ventilglieds, ein minimaler durchströmbarer Querschnitt zwischen dem ersten Einlass 11 und dem zweiten Auslass 22 kleiner als in der zweiten und größer als in der dritten Stellung des Ventilglieds, ein minimaler durchströmbarer Querschnitt zwischen dem zweiten Einlass 12 und dem zweiten Auslass 22 kleiner als in der ersten und dritten Stellung des Ventilglieds, und ein minimaler durchströmbarer Querschnitt zwischen dem zweiten Einlass 12 und dem ersten Auslass 21 kleiner als in der zweiten und größer als in der dritten Stellung des Ventilglieds.

Fig. 5E zeigt in Fig. 5A-D entsprechender Darstellung eine weitere Stellung des Ventilglieds.

In dieser verbindet die erste Fluidpassage 211-213 den ersten Einlass 11 nur mit dem zweiten Auslass 22 und die zweite Fluidpassage 221-223 verbindet den zweiten Einlass 12 mit dem ersten Auslass 21 und mit dem zweiten Auslass 22.

Wie insbesondere die Fign. 5A-5E illustrieren, kann das Ventilglied kontinuierlich verstellt werden und durchfährt dabei insbesondere die hier gezeigten Stellungen.

In Fig. 6(a) ist ein Wärmetransportmittelkreislauf mit dem Mischventil, einem ersten Teilkreislauf 1000, der an den ersten Einlass 11 und den ersten Auslass 21 des Mischventils angeschlossen ist, und einem zweiten Teilkreislauf 2000 skizziert, der an den zweiten Einlass 12 und den zweiten Auslass 22 des Mischventils angeschlossen ist. Zudem sind zur Verdeutlichung der Funktionsweise in Fig. 6 die Ströme des Wärmetransportmittels in dem bzw. durch das Mischventil angedeutet.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 11: erster Einlass
- 12: zweiter Einlass
- 21: erster Auslass
- 22: zweiter Auslass
- 100: Gehäuse
- 200: Ventilglied
- 211: erster Ast
- 212: zweiter Ast
- 213: dritter Ast
- 221: erste Aussparung
- 222: zweite Aussparung
- 223: Durchgangspassage
- 300: Dichtung
- 1000: erster Teilkreislauf
- 2000: zweiter Teilkreislauf
- D: Drehachse

## Patentansprüche

1. Mischventil, insbesondere für einen Wärmetransportmittelkreislauf und/oder ein Kraftfahrzeug, wobei das Mischventil
ein Gehäuse (100) mit
einem ersten Einlass (11);
einem zweiten Einlass (12);
einem ersten Auslass (21); und
einem zweiten Auslass (22); und
ein Ventilglied (200) aufweist, das
verstellbar wenigstens teilweise in dem Gehäuse (100) angeordnet ist und eine erste Fluidpassage (211-213), die
in einer ersten Stellung des Ventilglieds den ersten Einlass (11) mit dem ersten Auslass (21) verbindet;
in einer zweiten Stellung des Ventilglieds den ersten Einlass (11) mit dem zweiten Auslass (22) verbindet; und
in einer dritten Stellung des Ventilglieds den ersten Einlass (11) mit dem ersten Auslass (21) und mit dem zweiten Auslass (22) verbindet; und
eine zweite Fluidpassage (221-223) aufweist, die
in der ersten Stellung des Ventilglieds den zweiten Einlass (12) mit dem zweiten Auslass (22) verbindet;
in der zweiten Stellung des Ventilglieds den zweiten Einlass (12) mit dem ersten Auslass (21) verbindet; und
in der dritten Stellung des Ventilglieds den zweiten Einlass (12) mit dem ersten Auslass (21) und mit dem zweiten Auslass (22) verbindet, **dadurch gekennzeichnet, dass** die erste Fluidpassage eine Verzweigung mit einem ersten Ast (211), der in der ersten, zweiten und dritten Stellung, insbesondere in der ersten, zweiten, dritten und in einer vierten Stellung, des Ventilglieds mit dem ersten Einlass verbunden ist, einem zweiten Ast (212), der in der ersten und dritten Stellung, insbesondere in der ersten, dritten und vierten Stellung, des Ventilglieds mit dem ersten Auslass verbunden ist, und einem dritten Ast (213) aufweist, der in der zweiten und dritten Stellung, insbesondere in der zweiten, dritten und vierten Stellung, des Ventilglieds mit dem zweiten Auslass verbunden ist.

2. Mischventil nach Anspruch 1, **dadurch gekennzeichnet, dass**
- ein minimaler durchströmbarer Querschnitt zwischen dem ersten Einlass und dem ersten Auslass in der dritten Stellung des Ventilglieds kleiner ist als in der ersten Stellung des Ventilglieds;
- ein minimaler durchströmbarer Querschnitt zwischen dem ersten Einlass und dem zweiten Auslass in der dritten Stellung des Ventilglieds kleiner ist als in der zweiten Stellung des Ventilglieds;
- ein minimaler durchströmbarer Querschnitt zwischen dem zweiten Einlass und dem zweiten Auslass in der dritten Stellung des Ventilglieds kleiner ist als in der ersten Stellung des Ventilglieds; und/oder
- ein minimaler durchströmbarer Querschnitt zwischen dem zweiten Einlass und dem ersten Auslass in der dritten Stellung des Ventilglieds kleiner ist als in der zweiten Stellung des Ventilglieds.

3. Mischventil nach einem der vorhergehenden Ansprüche, **dadurch gekennzeichnet, dass** in der vierten Stellung des Ventilglieds die erste Fluidpassage den ersten Einlass mit dem ersten Auslass und mit dem zweiten Auslass verbindet und die zweite Fluidpassage den zweiten Einlass mit dem ersten Auslass und mit dem zweiten Auslass verbindet, wobei
- ein minimaler durchströmbarer Querschnitt zwischen dem ersten Einlass und dem ersten Auslass in der vierten Stellung des Ventilglieds kleiner ist als in der ersten und dritten Stellung des Ventilglieds;
- ein minimaler durchströmbarer Querschnitt zwischen dem ersten Einlass und dem zweiten Auslass in der vierten Stellung des Ventilglieds kleiner ist als in der zweiten und größer als in der dritten Stellung des Ventilglieds;
- ein minimaler durchströmbarer Querschnitt zwischen dem zweiten Einlass und dem zweiten Auslass in der vierten Stellung des Ventilglieds kleiner ist als in der ersten und dritten Stellung des Ventilglieds; und/oder
- ein minimaler durchströmbarer Querschnitt zwischen dem zweiten Einlass und dem ersten Auslass in der vierten Stellung des Ventilglieds kleiner ist als in der zweiten und größer als in der dritten Stellung des Ventilglieds.

4. Mischventil nach einem der vorhergehenden Ansprüche, **dadurch gekennzeichnet, dass**
- in einer weiteren Stellung des Ventilglieds die erste Fluidpassage den ersten Einlass nur mit dem ersten Auslass verbindet und die zweite Fluidpassage den zweiten Einlass mit dem ersten Auslass und mit dem zweiten Auslass verbindet; und/oder
- in einer weiteren Stellung des Ventilglieds die erste Fluidpassage den ersten Einlass nur mit dem zweiten Auslass verbindet und die zweite Fluidpassage den zweiten Einlass mit dem ersten Auslass und mit dem zweiten Auslass verbindet; und/oder
- in einer weiteren Stellung des Ventilglieds die erste Fluidpassage den ersten Einlass mit dem ersten Auslass und mit dem zweiten Auslass verbindet und die zweite Fluidpassage den zweiten Einlass nur mit dem ersten Auslass verbindet; und/oder
- in einer weiteren Stellung des Ventilglieds die erste Fluidpassage den ersten Einlass mit dem ersten Auslass und mit dem zweiten Auslass verbindet und die zweite Fluidpassage den zweiten Einlass nur mit dem zweiten Auslass verbindet.

5. Mischventil nach einem der vorhergehenden Ansprüche, **dadurch gekennzeichnet, dass** das Ventilglied stufenlos verstellbar ist.

6. Mischventil nach einem der vorhergehenden Ansprüche, **dadurch gekennzeichnet, dass** eine Außenfläche des Ventilglieds eine, insbesondere nutartige, erste Aussparung (221) aufweist, die
- in der dritten Stellung, insbesondere in der dritten und vierten Stellung, des Ventilglieds die beiden Einlässe miteinander verbindet, die beiden Auslässe miteinander verbindet oder wenigstens einen der Einlässe und wenigstens einen der Auslässe miteinander verbindet; und/oder
- durch eine Durchgangspassage (223) mit einer, insbesondere nutartigen, zweiten Aussparung (222) verbunden ist, die in wenigstens einer Stellung des Ventilglieds die beiden Einlässe miteinander verbindet, die beiden Auslässe miteinander verbindet oder wenigstens einen der Einlässe und wenigstens einen der Auslässe miteinander verbindet.

7. Mischventil nach einem der vorhergehenden Ansprüche, **dadurch gekennzeichnet, dass** wenigstens ein Abschnitt einer Außenfläche des Ventilglieds, insbesondere ein Abschnitt mit einer Öffnung des ersten Astes (211), ein Abschnitt mit einer Öffnung des zweiten Astes (212), ein Abschnitt mit einer Öffnung des dritten Astes (213), ein Abschnitt mit der ersten Aussparung (221) und/oder ein Abschnitt mit der zweiten Aussparung (222), rotationssymmetrisch, insbesondere kugelsegmentförmig, ist.

8. Mischventil nach einem der vorhergehenden Ansprüche, **dadurch gekennzeichnet, dass** die beiden Einlässe, die beiden Auslässe und/oder wenigstens einer der Einlässe und wenigstens einer der Auslässe in einer Rotationsrichtung um eine Drehachse (D) des Ventilglieds gegeneinander, insbesondere um wenigstens 45°, versetzt, insbesondere in einer Ebene angeordnet, sind und/oder die beiden Einlässe, die beiden Auslässe und/oder wenigstens einer der Einlässe und wenigstens einer der Auslässe in einer Umlaufrichtung um eine zur Drehachse (D) des Ventilglieds senkrechte Versatzachse gegeneinander, insbesondere um wenigstens 45°, versetzt sind, insbesondere die Drehachse (D) des Ventilglieds wenigstens einen der Einlässe und/oder wenigstens einen der Auslässe durchstößt.

9. Wärmetransportmittelkreislauf, insbesondere für ein Kraftfahrzeug, mit einem Mischventil nach einem der vorhergehenden Ansprüche, einem ersten Teilkreislauf (1000), der an den ersten Einlass und den ersten Auslass des Mischventils angeschlossen ist, und einem zweiten Teilkreislauf (2000), der an den zweiten Einlass und den zweiten Auslass des Mischventils angeschlossen ist.

10. Kraftfahrzeug, insbesondere Personenkraftwagen, mit einem Mischventil, insbesondere Wärmetransportmittelkreislauf, nach einem der vorhergehenden Ansprüche.

11. Verfahren zum selektiven Verbinden von Ein- und Auslässen eines Mischventils nach einem der vorhergehenden Ansprüche, **dadurch gekennzeichnet, dass** dessen Ventilglied (200) in die erste Stellung, die zweite Stellung und die dritte Stellung, insbesondere in die vierte Stellung, verstellt wird.

## Claims

1. Mixing valve, in particular for a heat-transport-medium circuit and/or
a motor vehicle, the mixing valve
comprising a housing (100)
with a first inlet (11);
with a second inlet (12);
with a first outlet (21); and
with a second outlet (22); and
comprising a valve element (200),
which valve element is arranged adjustably at least partially in the housing (100) and has a first fluid passage (211-213) which,
in a first position of the valve element, connects the first inlet (11) to the first outlet (21);
in a second position of the valve element, connects the first inlet (11) to the second outlet (22); and,
in a third position of the valve element, connects the first inlet (11) to the first outlet (21) and to the second outlet (22); and
which valve element has a second fluid passage (221-223) which,
in the first position of the valve element, connects the second inlet (12) to the second outlet (22);
in the second position of the valve element, connects the second inlet (12) to the first outlet (21); and,
in the third position of the valve element, connects the second inlet (12) to the first outlet (21) and to the second outlet (22), **characterized in that** the first fluid passage has a branch with a first limb (211) which, in the first, second and third positions, in particular in the first, second, third positions and a fourth position, of the valve element, is connected to the first inlet, with a second limb (212) which, in the first and third positions, in particular in the first, third and fourth positions, of the valve element, is connected to the first outlet, and with a third limb (213) which, in the second and third positions, in particular in the second, third and fourth positions, of the valve element, is connected to the second outlet.

2. Mixing valve according to Claim 1, **characterized in that**
- a minimum through-flowable cross section between the first inlet and the first outlet is smaller in the third position of the valve element than in the first position of the valve element;
- a minimum through-flowable cross section between the first inlet and the second outlet is smaller in the third position of the valve element than in the second position of the valve element;
- a minimum through-flowable cross section between the second inlet and the second outlet is smaller in the third position of the valve element than in the first position of the valve element; and/or
- a minimum through-flowable cross section between the second inlet and the first outlet is smaller in the third position of the valve element than in the second position of the valve element.

3. Mixing valve according to either of the preceding claims, **characterized in that**, in the fourth position of the valve element, the first fluid passage connects the first inlet to the first outlet and to the second outlet, and the second fluid passage connects the second inlet to the first outlet and to the second outlet, wherein
- a minimum through-flowable cross section between the first inlet and the first outlet is smaller in the fourth position of the valve element than in the first and third positions of the valve element;
- a minimum through-flowable cross section between the first inlet and the second outlet is smaller in the fourth position of the valve element than in the second position of the valve element and greater in the fourth position of the valve element than in the third position of the valve element;
- a minimum through-flowable cross section between the second inlet and the second outlet is smaller in the fourth position of the valve element than in the first and third positions of the valve element; and/or
- a minimum through-flowable cross section between the second inlet and the first outlet is smaller in the fourth position of the valve element than in the second position of the valve element and greater in the fourth position of the valve element than in the third position of the valve element.

4. Mixing valve according to one of the preceding claims, **characterized in that**,
- in a further position of the valve element, the first fluid passage connects the first inlet only to the first outlet, and the second fluid passage connects the second inlet to the first outlet and to the second outlet; and/or,
- in a further position of the valve element, the first fluid passage connects the first inlet only to the second outlet, and the second fluid passage connects the second inlet to the first outlet and to the second outlet; and/or,
- in a further position of the valve element, the first fluid passage connects the first inlet to the first outlet and to the second outlet, and the second fluid passage connects the second inlet only to the first outlet; and/or,
- in a further position of the valve element, the first fluid passage connects the first inlet to the first outlet and to the second outlet, and the second fluid passage connects the second inlet only to the second outlet.

5. Mixing valve according to one of the preceding claims, **characterized in that** the valve element is adjustable in a continuously variable manner.

6. Mixing valve according to one of the preceding claims, **characterized in that** an outer surface of the valve element has an in particular groove-like first cutout (221)
- which, in the third position, in particular in the third and fourth positions, of the valve element, connects the two inlets to one another, connects the two outlets to one another, or connects at least one of the inlets and at least one of the outlets to one another; and/or
- which is connected by a through-passage (223) to an in particular groove-like second cutout (222) which, in at least one position of the valve element, connects the two inlets to one another, connects the two outlets to one another, or connects at least one of the inlets and at least one of the outlets to one another.

7. Mixing valve according to one of the preceding claims, **characterized in that** at least one portion of an outer surface of the valve element, in particular a portion with an opening of the first limb (211), a portion with an opening of the second limb (212), a portion with an opening of the third limb (213), a portion with the first cutout (221) and/or a portion with the second cutout (222), is of rotationally symmetrical, in particular spherical-segment-shaped form.

8. Mixing valve according to one of the preceding claims, **characterized in that** the two inlets, the two outlets and/or at least one of the inlets and at least one of the outlets are arranged so as to be offset with respect to one another, in particular by at least 45°, in a direction of rotation about an axis of rotation (D) of the valve element, and in particular in a plane, and/or the two inlets, the two outlets and/or at least one of the inlets and at least one of the outlets are offset with respect to one another, in particular by at least 45°, in a direction of revolution about an offset axis that is perpendicular to the axis of rotation (D) of the valve element, and, in particular, the axis of rotation (D) of the valve element passes through at least one of the inlets and/or at least one of the outlets.

9. Heat-transport-medium circuit, in particular for a motor vehicle, having a mixing valve according to one of the preceding claims, having a first partial circuit (1000), which is connected to the first inlet and to the first outlet of the mixing valve, and having a second partial circuit (2000), which is connected to the second inlet and to the second outlet of the mixing valve.

10. Motor vehicle, in particular passenger motor vehicle, having a mixing valve, in particular heat-transport-medium circuit, according to one of the preceding claims.

11. Method for selectively connecting inlets and outlets of a mixing valve according to one of the preceding claims, **characterized in that** the valve element (200) of said mixing valve is adjusted into the first position, the second position and the third position, in particular into the fourth position.

## Revendications

1. Soupape de mélange, notamment pour un circuit de fluide caloporteur et/ou
un véhicule automobile, la soupape de mélange présentant un boîtier (100) avec
une première entrée (11) ;
une deuxième entrée (12) ;
une première sortie (21) ; et
une deuxième sortie (22) ; et
un organe de soupape (200) qui
est agencé de manière réglable au moins partiellement dans le boîtier (100) et un premier passage de fluide (211-213) qui
dans une première position de l'organe de soupape, relie la première entrée (11) à la première sortie (21) ;
dans une deuxième position de l'organe de soupape, relie la première entrée (11) à la deuxième sortie (22) ; et
dans une troisième position de l'organe de soupape, relie la première entrée (11) à la première sortie (21) et à la deuxième sortie (22) ; et
un deuxième passage de fluide (221-223), qui
dans la première position de l'organe de soupape, relie la deuxième entrée (12) à la deuxième sortie (22) ;
dans la deuxième position de l'organe de soupape, relie la deuxième entrée (12) à la première sortie (21) ; et
dans la troisième position de l'organe de soupape, relie la deuxième entrée (12) à la première sortie (21) et à la deuxième sortie (22), **caractérisée en ce que** le premier passage de fluide présente une ramification avec une première branche (211) qui est reliée à la première entrée dans les première, deuxième et troisième positions, notamment dans les première, deuxième, troisième et dans une quatrième positions de l'organe de soupape, une deuxième branche (212) qui est reliée à la première sortie dans les première et troisième positions, notamment dans les première, troisième et quatrième positions, de l'organe de soupape, et une troisième branche (213) qui est reliée à la deuxième sortie dans les deuxième et troisième positions, notamment dans les deuxième, troisième et quatrième positions, de l'organe de soupape.

2. Soupape de mélange selon la revendication 1, **caractérisée en ce que**
- une section transversale minimale pouvant être traversée entre la première entrée et la première sortie est plus petite dans la troisième position de l'organe de soupape que dans la première position de l'organe de soupape ;
- une section transversale minimale pouvant être traversée entre la première entrée et la deuxième sortie est plus petite dans la troisième position de l'organe de soupape que dans la deuxième position de l'organe de soupape ;
- une section transversale minimale pouvant être traversée entre la deuxième entrée et la deuxième sortie est plus petite dans la troisième position de l'organe de soupape que dans la première position de l'organe de soupape ; et/ou
- une section transversale minimale pouvant être traversée entre la deuxième entrée et la première sortie est plus petite dans la troisième position de l'organe de soupape que dans la deuxième position de l'organe de soupape.

3. Soupape de mélange selon l'une quelconque des revendications précédentes, **caractérisée en ce que**, dans la quatrième position de l'organe de soupape, le premier passage de fluide relie la première entrée à la première sortie et à la deuxième sortie, et le deuxième passage de fluide relie la deuxième entrée à la première sortie et à la deuxième sortie,
- une section transversale minimale pouvant être traversée entre la première entrée et la première sortie étant plus petite dans la quatrième position de l'organe de soupape que dans les première et troisième positions de l'organe de soupape ;
- une section transversale minimale pouvant être traversée entre la première entrée et la deuxième sortie étant plus petite dans la quatrième position de l'organe de soupape que dans la deuxième position et plus grande que dans la troisième position de l'organe de soupape ;
- une section transversale minimale pouvant être traversée entre la deuxième entrée et la deuxième sortie étant plus petite dans la quatrième position de l'organe de soupape que dans les première et troisième positions de l'organe de soupape ; et/ou
- une section transversale minimale pouvant être traversée entre la deuxième entrée et la première sortie étant plus petite dans la quatrième position de l'organe de soupape que dans la deuxième position et plus grande que dans la troisième position de l'organe de soupape.

4. Soupape de mélange selon l'une quelconque des revendications précédentes, **caractérisée en ce que**
- dans une autre position de l'organe de soupape, le premier passage de fluide relie la première entrée uniquement à la première sortie et le deuxième passage de fluide relie la deuxième entrée à la première sortie et à la deuxième sortie ; et/ou
- dans une autre position de l'organe de soupape, le premier passage de fluide relie la première entrée uniquement à la deuxième sortie et le deuxième passage de fluide relie la deuxième entrée à la première sortie et à la deuxième sortie ; et/ou
- dans une autre position de l'organe de soupape, le premier passage de fluide relie la première entrée à la première sortie et à la deuxième sortie, et le deuxième passage de fluide relie la deuxième entrée uniquement à la première sortie ; et/ou
- dans une autre position de l'organe de soupape, le premier passage de fluide relie la première entrée à la première sortie et à la deuxième sortie, et le deuxième passage de fluide relie la deuxième entrée uniquement à la deuxième sortie.

5. Soupape de mélange selon l'une des revendications précédentes, **caractérisée en ce que** l'organe de soupape est réglable en continu.

6. Soupape de mélange selon l'une quelconque des revendications précédentes, **caractérisée en ce qu'**une surface extérieure de l'organe de soupape présente un premier évidement (221), notamment de type rainure, qui
- dans la troisième position, notamment dans les troisième et quatrième positions, de l'organe de soupape, relie les deux entrées entre elles, relie les deux sorties entre elles ou relie au moins l'une des entrées et au moins l'une des sorties entre elles ; et/ou
- est relié par un passage (223) à un deuxième évidement (222), notamment de type rainure, qui, dans au moins une position de l'organe de soupape, relie les deux entrées entre elles, relie les deux sorties entre elles ou relie au moins l'une des entrées et au moins l'une des sorties entre elles.

7. Soupape de mélange selon l'une quelconque des revendications précédentes, **caractérisée en ce qu'**au moins une section d'une surface extérieure de l'organe de soupape, notamment une section avec une ouverture de la première branche (211), une section avec une ouverture de la deuxième branche (212), une section avec une ouverture de la troisième branche (213), une section avec le premier évidement (221) et/ou une section avec le deuxième évidement (222), présente une symétrie de révolution, notamment une forme de segment de sphère.

8. Soupape de mélange selon l'une quelconque des revendications précédentes, **caractérisée en ce que** les deux entrées, les deux sorties et/ou au moins l'une des entrées et au moins l'une des sorties sont agencées en décalage les unes par rapport aux autres, notamment d'au moins 45°, dans une direction de rotation autour d'un axe de rotation (D) de l'organe de soupape, notamment dans un plan, et/ou les deux entrées, les deux sorties et/ou au moins l'une des entrées et au moins l'une des sorties sont décalées les unes par rapport aux autres, notamment d'au moins 45°, dans une direction périphérique autour d'un axe de décalage perpendiculaire à l'axe de rotation (D) de l'organe de soupape, notamment l'axe de rotation (D) de l'organe de soupape traverse au moins l'une des entrées et/ou au moins l'une des sorties.

9. Circuit de fluide caloporteur, notamment pour un véhicule automobile, avec une soupape de mélange selon l'une quelconque des revendications précédentes, un premier sous-circuit (1000) raccordé à la première entrée et à la première sortie de la soupape de mélange, et un deuxième sous-circuit (2000) raccordé à la deuxième entrée et à la deuxième sortie de la soupape de mélange.

10. Véhicule automobile, notamment voiture particulière, avec une soupape de mélange, notamment un circuit de fluide caloporteur, selon l'une quelconque des revendications précédentes.

11. Procédé de liaison sélective d'entrées et de sorties d'une soupape de mélange selon l'une quelconque des revendications précédentes, **caractérisé en ce que** l'organe de soupape (200) de celle-ci est réglé dans la première position, la deuxième position et la troisième position, notamment dans la quatrième position.
